# EUROPÄISCHE PATENTSCHRIFT

(11) **EP 1 442 230 B1**
(45) Veröffentlichungstag und Bekanntmachung des Hinweises auf die Patenterteilung: **28.05.2008**
(21) Anmeldenummer: 02783041.3
(22) Anmeldetag: 31.10.2002
(51) Int. Cl.: F16F 15/16

(54) **KOMBINIERTE SCHWUNGRAD-DÄMPFUNGSEINHEIT**
COMBINED FLYWHEEL DAMPING UNIT
UNITE COMBINEE D'AMORTISSEMENT DE VOLANT

(30) Priorität: 05.11.2001 DE 10153839
(43) Veröffentlichungstag der Anmeldung: 04.08.2004
(73) Patentinhaber: Voith Turbo GmbH & Co. KG, 89522 Heidenheim (DE)
(72) Erfinder: POLIFKE, Gregor, 89537 Giengen (DE)
(74) Vertreter: Dr. Weitzel & Partner
(86) Internationale Anmeldenummer: PCT/EP2002/012129
(87) Internationale Veröffentlichungsnummer: WO 2003/040590

(56) Entgegenhaltungen:
- DE-A- 4 017 514
- DE-A- 19 602 609
- US-A- 5 353 664
- US-A- 5 573 460
- US-A- 5 730 656
- DATABASE WPI Section PQ, Week 199441 Derwent Publications Ltd., London, GB; Class Q63, AN 1990-378044 XP002232835 -& EP 0 403 338 A (PIERRE CASSE ET AL.) 19. Dezember 1990 (1990-12-19)

## Beschreibung

Die Erfindung betrifft einen Antriebsstrang, im einzelnen mit den Merkmalen aus dem Oberbegriff des Anspruchs 1.

Dämpfungsvorrichtungen in Form von elastischen Kupplungen sind beispielsweise aus den nachfolgenden Druckschriften
1. DE 83 18 041
2. DE 29 37 237 C2
3. DE 197 50 408 C1
vorbekannt. Diese sind in der Regel zwischen zwei Bauelementen in einem Antriebsstrang angeordnet, beispielsweise einer Verbrennungskraftmaschine und einem Getriebe und dienen neben der Drehmomentübertragung zwischen den zwei Bauelementen im Antriebsstrang dazu, die Torsionsschwingungen nicht auf den übrigen Antriebsstrang zu übertragen. Die Grundfunktion entspricht dabei der einer drehelastischen Kupplung. Zur Realisierung dieser einzelnen Funktionen - Drehmomentenübertragung und Dämpfung - weist die Vorrichtung zur Dämpfung von Schwingungen, insbesondere der Schwingungsdämpfer, eine Federkopplung und eine Dämpfungskopplung auf. Beide Funktionen können dabei von denselben Bauelementen erfüllt werden. Es ist jedoch auch eine Funktionstrennung denkbar.

Die Dämpfungsvorrichtung weist dazu zwei Kupplungselemente auf, ein erstes Kupplungselement und ein zweites Kupplungselement, welche in Umfangsrichtung relativ zueinander verdrehbar ausgeführt sind. Das eine der beide Kupplungselemente ist dabei drehfest mit der Antriebsseite im Traktionsbetrieb betrachtet, beispielsweise einer Verbrennungskraftmaschine, verbindbar, während das andere, in Kraftflußrichtung im Traktionsbetrieb betrachtet, von der Antriebsmaschine zum Abtrieb abtriebsseitig angeordnete, zweite Kupplungselement beispielsweise mit einem Eingang einer Getriebebaueinheit verbindbar ist. Beide Kupplungselemente sind aufgrund der Federkopplung in

Umfangsrichtung relativ zueinander begrenzt verdrehbar, wobei die Verdrehung beispielsweise entgegen der Kraft von Federeinrichtungen erfolgt, welche über den Umfang der Dämpfungsvorrichtung verteilt angeordnet sind. Die Federeinrichtungen sind beispielsweise innerhalb von Dämpfungskammern angeordnet, welche zusätzlich mit einem Dämpfungsmedium, beispielsweise mit Fett, befüllt sind. Da durch die drehelastische Kopplung der beiden Kupplungselemente eine Drehmomentübertragung erfolgt, werden diese hinsichtlich der Leistungsübertragung im Traktionsbetrieb betrachtet auch als Primärteil und Sekundärteil einer Kupplungseinrichtung bezeichnet. Die aus der Druckschrift DE 29 37 237 vorbekannte elastische Kupplungseinrichtung weist zwei Kupplungshälften auf, einerseits ein zweiteiliges Kupplungsgehäuse und des weiteren eine Mittelscheibe, welche an eine Nabe angeformt ist. In der Mittelscheibe sind Durchgangsöffnungen angeordnet, denen in Einbaulage an der Innenseite des Gehäuses entsprechende Ausnehmungen zugeordnet sind, in welchen Federeinrichtungen, unterstützt durch sogenannte Federteller, angeordnet sind. Der Außenumfang der Mittelscheibe bildet dann zusammen mit dem Gehäuse Verdrängungskammern, die mit einem Dämpfungsmedium, beispielsweise Fett, befüllt sein können. Diese dienen zusammen mit einer in das Kupplungsgehäuse eingeführten Flüssigkeit der Dämpfung von Torsionsschwingungen. Der Innenraum des Kupplungsgehäuses ist nach außen hin abgedichtet.

Die Integration derartiger Vorrichtungen in Form von elastischen Kupplungen in einem Antriebsstrang erfolgt immer nachgeschaltet zum der Verbrennungskraftmaschine zugeordneten Schwungrad, welchem die Aufgabe zukommt, während des Arbeitstaktes einen Teil der Bewegungsenergie zu speichern und während des Leertaktes diese wieder abzugeben. Des weiteren sorgt das Schwungrad aufgrund seiner großen Masse und damit infolge der Trägheit für eine gleichförmige Drehbewegung der Kurbelwelle. Das Schwungrad ist dabei drehfest mit der Motorabtriebswelle gekoppelt. Die Zuordnung der Vorrichtung zur Dämpfung von Schwingungen, insbesondere der elastischen Kupplung, erfolgt dann dem Schwungrad nachgeordnet, wobei aufgrund des Erfordernisses nach geringer axialer Baulänge die elastische Kupplung mit ihrem ersten Kupplungselement am Schwungrad angeflanscht wird. Die Komponenten

Schwungrad und Vorrichtung zur Dämpfung von Schwingungen, werden dabei in der Regel von unterschiedlichen Herstellern geliefert. Die integration, insbesondere bei gewünschter platzsparender Bauweise, erfordert daher eine genaue Abstimmung zwischen den Herstellern, um die drehfeste Verbindung zwischen dem Schwungrad und dem Primärteil der Dämpfungsvorrichtung, welche gleichzeitig als elastische Kupplung fungiert, zu realisieren oder zusätzlicher kompatibler Zwischenflansche, die beliebig austauschbar sind und für eine Vielzahl unterschiedlicher gewünschter Verbindungen vorgefertigt sein können. Bei der bekannten Ausführung des Schwungrades als 2-Massen-Schwungrad erfolgt eine Aufteilung der beiden Massen bzw. der Trägheitsmomentenverhältnisse. An der in Kraftflussrichtung von der Antriebsmaschine zum Abtrieb betrachtet zweiten Masse greift dann die Kupplung an. Derartige Ausführungen werden in Fahrzeugen mit Handschaltgetriebe eingesetzt. Ein Ausgleich von Schwingungen erfolgt vornehmlich durch die Aufteilung der zwei Schwungmassen. Demgegenüber wird in Automatgetrieben häufig ein Torsionaschwingungsdämpfer in Form eines hydraulischen Dämpfers, wie bereits oben beschrieben, eingesetzt. Bei diesem handelt es sich jedoch um eine autarke Einheit, die an ein bestehendes Schwungrad auf der Motorseite angeschraubt wird und damit in Bezug auf die Kopplung eine Abstimmung mit dem Schwingrad erfordert. Der Ausgang, insbesondere der Sekundärteil, ist dabei in der Regel über eine Welle-Nabe-Verbindung mit der Getriebeeingangswelle verbunden. Ausführungen einer elastischen Kupplungseinrichtung in Form eines hydraulisch gedämpften Zweimassenschwungsrades sind beispielhaft aus der Druckschrift DE 196 02 609 A1 bekannt. Diese offenbart zwei miteinander gekoppelte Massen, eine Primärmasse und eine Sekundärmasse, wobei die Sekundärmasse über der Primärmasse gelagert ist und ferner eine mit der Sekundärmasse gekoppeltes Kupplungselement, welches Bestandteil einer Kupplungseinrichtung ist. Zwischen Primärmasse und Sekundärmasse in Form zweier gegeneinander verdrehbarer Schwungradhälften wird ein flüssigkeitsdichter Innenraum gebildet, der mit einem flüssigen Dämpfungsmedium als hydraulische Dämpfungseinrichtung zusammenwirkt. Damit wird quasi die Funktion eines Schwungrades und eines Dämpfers in einer Baueinheit integriert.

Aus der Druckschrift EP 0 403 338 A1, welche als nächstliegender Stand der Technik gilt, ist eine kombinierte Schwungsrad-Dämpfungseinheit vorbekannt, bei welcher das Schwungrad gleichzeitig das Primärteil der Dämpfungseinheit bildet. Das Schwungrad ist dabei an der Kurbelwelle über eine Befestigungseinrichtung befestigt. Damit wird in axialer und radialer Richtung eine feste Lagezuordnung insbesondere für den mit dem Schwungrad gekoppelten Anlasserzahnkranz und den Ober diesen erfolgenden Zahneingriff ermöglicht. Die Befestigungselemente sind dabei im Bereich der Rotationsachse angeordnet und führen in diesem Bereich aufgrund der erforderlichen Durchgangsöffnungen am Schwungrad zu einer Festigkeitsminimlerung. Ferner ist der entsprechende Bauraum für die Befestigungselemente mit zu berücksichtigen, was sich insbesondere auf die Ausbildung und Auslegung des Sekundärteils auswirkt.

Der Erfindung liegt daher die Aufgabe zugrunde, Schwungrad und eine Dämpfungsvorrichtung in besonders platzsparender und kostensparender Weise im Antriebsstrang zu integrieren, wobei aufwendige Abstimmungen zwischen den Herstellern der unterschiedlichen Komponenten vermieden werden sollen.

Die erfindungsgemäße Lösung ist durch die Merkmale des Anspruchs 1 charakterisiert. Vorteilhafte Ausgestaltungen sind in den Unteransprüchen beschrieben. Ein Antriebstrang mit einer erfindungsgemäß ausgeführten Schwungrad-Dämpfungseinheit ist in Anspruch 22 widergegeben.

In den Ausführungsbeispielen sind die Dämpfungsvorrichtung und das Schwungrad als kombinierte Schwungrad-Dämpfungseinheit ausgeführt. Die Dämpfungsvorrichtung umfaßt dabei einen Primärteil und einen Sekundärteil, die relativ zueinander in Umfangsrichtung begrenzt verdrehbar sind und drehelastisch miteinander gekoppelt sind. Primärteil und Sekundärteil sind über Mittel zur Dämpfungkopplung und Mittel zur Federkopplung miteinander verbunden. Dabei wird erfindungsgemäß der Primärteil wenigstens teilweise, vorzugsweise vollständig vom Schwungrad gebildet. D.h. das Schwungrad bildet wenigstens eine Wandung der Dämpfungsvorrichtung. Die Ausführung ist dabei frei von einer Lagerung zwischen Primärteil und Sekundärteil.

Die Lösung bietet den Vorteil einer baulichen Vereinigung von Schwungrad und einer Vorrichtung zur Dämpfung von Schwingungen. Das Schwungrad selbst liegt dabei in Form nur einer einzigen Schwungmasse vor. Mit dieser Lösung wird es möglich, einen hinsichtlich seiner Baulänge in axialer Richtung besonders kompakten Dämpfungsmodul zu schaffen, welcher auch von nur einem Hersteller angeboten wird, wobei durch die Integration des Schwungrades aufwendige Abstimmungsarbeiten mit dem Kunden oder Schwungradherstellern entfallen können. Ein weiterer wesentlicher Vorteil besteht darin, daß durch die komplett vormontierte, kombinierte Schwungrad-Dämpfungseinheit Montageschritte eingespart werden können, da diese Einheit einmal montiert nur noch an den benachbarten Elementen befestigt werden muß und nicht der Dämpfer als eine Baueinheit und das Schwungrad als weiteres Bauteil, wodurch die Kopplung zwischen Schwungrad und Dämpfer als Montageschritt bei Integration in den Antriebsstrang entfällt.

Unter einem weiteren Aspekt der Erfindung ist der üblicherweise dem Schwungrad zugeordnete Anlasserzahnkranz drehfest mit dem Primärteil verbunden. Gemäß einer besonders vorteilhaften Ausgestaltung sind Anlasserzahnkranz und Primärteil als integrale Baueinheit, d.h. einteilig, ausgeführt. Die Anzahl der Einzelteile kann somit noch einmal minimiert werden. Ein besonderer Vorteil der Kompakteinheit aus Schwingungsdämpfer und Schwungrad besteht jedoch in der Reduzierung der axialen Baulänge, welche der zunehmenden Tendenz zu kleineren Bauräumen im Fahrzeugbau entspricht. Das Hauptanwendungsgebiet der erfindungsgemäßen Lösung sind Automatikgetriebe und Lastschaltgetriebe, da hier während eines Schaltvorganges keine Zugkraftunterbrechung erforderlich ist und somit eine ständige drehelastische Kopplung vorliegen kann.

Bezüglich der konkreten konstruktiven Ausführung bestehen eine Vielzahl von Möglichkeiten. Dies ist jedoch abhängig von der Art der Dämpfung. Grundsätzlich werden dabei folgende zwei Dämpfungsarten unterschieden:
a) Reibdämpfung
b) hydraulische Dämpfung.

Vorzugsweise finden Ausführungen mit hydraulischer Dämpfung Verwendung, da diese auch bei sehr hohen Belastungen nahezu verschleißfrei arbeiten. Bei Ausführungen mit Reibdämpfung kann die Funktion der Dämpfung von den Mitteln zur drehelastischen Kopplung mit übernommen werden. Eine weitere Möglichkeit besteht darin, die beiden Kupplungselemente - Primärteil und Sekundärteil - über eine Federkopplung durch Federeinheiten miteinander zu verbinden. Dazu sind zwischen Schwungrad und Sekundärteil tangential angeordnete Spiraldruckfedern vorgesehen, die in entsprechenden Ausschnitten, welche vom Primärteil und Sekundärteil gebildet werden, angeordnet sind und in diese eingelegt werden. Dabei stützt sich das Federelement jeweils auf einer Seite am Schwungrad und auf der anderen Seite am Sekundärteil ab. Die Federeinheiten übernehmen dabei zusätzlich die Funktion der Dämpfung. Alternativ besteht auch die Möglichkeit, separate Mittel zur Erzeugung einer Reibdämpfung vorzusehen, z.B. eine Tellerfeder zur Erzeugung einer Anpreßkraft an Reibfunktionsflächen. Bei einer solchen Anordnung sind die Federeinheiten sowie die Einheiten zur Erzeugung der Reibdämpfung funktional getrennt.

Bei Ausführungen mit hydraulischer Dämpfung ist die Vorrichtung zur Dämpfung von Schwingungen ebenfalls so ausgeführt, daß diese ein Primärteil in Form des Schwungrades und ein Sekundärteil umfaßt, wobei beide über eine drehelastische Kopplung zum Zwecke der Drehmomentübertragung miteinander verbunden sind. Ferner sind Mittel zur Dämpfung von Schwingungen vorgesehen, welche von in entsprechend dafür vorgesehenen Kammern, die mit Fett oder mit einem anderen Dämpfungsfluid gefüllt sind, gebildet werden. In diesem Fall bilden Schwungrad und Sekundärteil einen flüssigkeitsdichten Innenraum, wobei aus Montagegründen dem Primärteil zu diesem Zweck Gehäusescheiben zugeordnet sind, damit eine Umschließung des Sekundärteiles in Umfangsrichtung und zum Teil in radialer Richtung möglich ist. Zwischen dem äußeren Umfang des Sekundärteils und dem radial inneren Umfang des Schwungrades befindet sich vorzugsweise ein schwimmender Dämpfungsring. Dieser kann einteilig oder aber auch mehrteilig in Umfangsrichtung ausgeführt sein. Dieser ist innerhalb des Primärteils drehbeweglich gelagert und sowohl gegenüber dem Schwungrad als auch dem Sekundärteil begrenzt verdrehbar geführt. Mit keiner der beiden Kupplungselemente - Schwungrad und Sekundärteil - steht er jedoch in formschlüssiger Verbindung. Dieser schwimmende Dämpfungsring bildet dabei sowohl mit dem Schwungrad eine radial außenliegende Verdrängungskammer und mit dem Sekundärteil eine zweite Verdrängungskammer. Zu diesem Zweck weist der schwimmende Dämpfungsring beispielsweise am äußeren Umfang mehrere Vorsprünge auf, die die ersten Verdrängungskammern begrenzen. Zur Bildung der zweiten Verdrängungskammern sind Ausbuchtungen vorgesehen, welche am Sekundärteil ausgebildete Noppen aufnehmen. Die einzelnen Verdrängungskammern können dabei unterschiedlich groß ausgebildet werden. Die erste Verdrängungskammer erstreckt sich dabei über einen großen Verdrehwinkel zwischen den Vorsprüngen und einem vorgesehenen Zentrier- bzw. Distanzelement, bei dessen Überwindung der schwimmende Dämpfungsring das im Innenraum befindliche Dämpfungsmedium durch einen Spalt zwischen dem Distanz- und Zentrierelement und dem schwimmenden Dämpfungsring verdrängen muß. Die Verdrängung von Dämpfungsmedium In der zweiten Verdrängungskammer erfolgt beispielsweise durch Spalte zwischen dem - schwimmenden Dämpfungsring und Ausnehmungen am Sekundärteil. Die Vorsprünge des schwimmenden Dämpfungsringes weisen dabei entsprechende Anschlagsflächen auf, welche die Verdrängungskammem in Umfangsrichtung begrenzen. Mittels dieser Ausführung kann die Dämpfungswirkung eingestellt werden, insbesondere können beide Dämpfungskammem in unterschiedlichen Betriebsbereichen zum Einsatz gelangen.

Die Vorrichtungen zur Dämpfung von Schwingungen können hinsichtlich ihrer konstruktiven Ausführung der einzelnen Teile - Schwungrad und Sekundärteil - sowie der Federkopplung und Dämpfungskopplung zwischen beiden ebenfalls vielgestaltig ausgeführt werden. Dabei besteht die Möglichkeit, die Funktionen der Federkopplung und Dämpfungskopplung von ein und denselben konstruktiven Bauelementen oder aber nach Art einer Funktionstrennung mit unterschiedlichen Konstruktionselementen ausführen zu lassen. Die Drehmomentübertragung und damit die Federkopplung erfolgt dabei direkt über Federeinrichtungen, welche zwischen den einzelnen Schwungmassen angeordnet sind und diese miteinander koppeln. Denkbar sind jedoch auch Ausführungen, bei welchen die Übertragung über andere Medlen, beispielsweise eine Flüssigkeit, erfolgt. Bei diesen wird Immer ein Zustand erreicht, welcher eine Drehmomentübertragung und damit Kopplung zwischen Primärteil und Sekundärteil ermöglicht.

Auch bezüglich der konkreten konstruktiven Anbindung der Dämpfungsvorrichtung mit integriertem Schwungrad bestehen eine Mehrzahl von Möglichkeiten. Schwungrad und Sekundärteil können dabei jeweils kraft- und/oder formflüssig mit den entsprechenden Anschlußelementen gekoppelt werden. Für das Sekundärteil handelt es sich in der Regel um die Getriebeeingangswelle oder ein, drehfest mit der Getriebeeingangswelle, gekoppeltes Bauelement. Formschlüssige Verbindungen erfolgen dabei in der Regel über eine Welle-Nabe-Verbindung in Form entsprechender Ausgestaltungen mit zueinander komplementären Vorsprüngen und Ausnehmungen an den zueinanderweisenden Flächen von Welle und Nabe. Vorzugsweise wird dabei eine Keilwellenverzahnung oder eine Evolventenverzahnung verwendet. Der Kraft- und/oder Formschluß erfolgt durch in Umfangsrichtung fixierende Elemente, welche entweder in radialer Richtung ausgerichtet sind oder aber in axialer. Eine weitere Möglichkeit besteht beispielsweise darin, eine Befestigung mittels Befestigungselementen in Form von Schraubverbindungen vorzunehmen.

Je nach Art der Fixierung zwischen Sekundärteil und Schwungrad in axialer Richtung zueinander ist für die gewählten form- und/oder kraftschlüssigen Verbindungen zu beiden Anschlußelementen eine axiale Sicherung erforderlich oder nicht.

In einer vorteilhaften weiterbildung der Erfindung ist das Sekundärteil einstellbeweglich zur Primärseite im Rahmen des aufgrund der Toleranzen der einzelnen Elemente vorhandenen Spiels. Die Führung erfolgt aufgrund der Freiheit von einem Lager zwischen Primärteil und Sekundärteil allein über das Federsystem und/oder das Dämpfersystem. Diese Lösung bietet den Vorteil einer erheblichen Teilereduktion und Funktionsverdichtung, wie z. B. einen Ausgleich von Biegeschwingungen hervorgerufen von der Kurbelwelle.

Bei diesen Ausführungen, frei von einer Lagerung zwischen dem Sekundärteil und dem Schwungrad, ist die Vorrichtung bzw. deren einzelne Elemente jeweils fliegend an den mit diesen zu koppelnden Anschlußelementen gelagert. Dabei erfolgt die Kopplung zwischen Schwungrad und Motorabtriebswelle und Sekundärteil und wenigstens einem, mit der Getriebeeingangswelle drehfest gekoppelten, Element form- und/oder kraftschlüssig, beispielsweise über eine Welle-Nabe-Verbindung.

Des weiteren kann das Primärteil auch an einer Flexplatte, welche mit der Motorabtriebswelle drehfest gekoppelt ist, verschraubt werden.

Bei Verschraubungslösungen für das Schwungrad mit der Motorabtriebswelle können zur Erleichterung der Montage im Sekundärteil Montageöffnungen zum Durchstecken und Anziehen von Befestigungselementen vorgesehen werden.

Entsprechend der Ausgestaltung der Art der Dämpfungskopplung wird das Primärteil vom Schwungrad und eine dem Schwungrad zugeordnete Gehäusescheibe gebildet, welche mit diesem drehfest verbunden ist. Das Schwungrad bildet dabei eine Wandung, das heißt eine Teilfläche für die Dämpfungsvorrichtung. Bei hydraulischer Dämpfung wird zum Zwecke der Bildung eines dichten Innenraumes das Schwungrad derart ausgeführt, daß dieses das Sekundärteil in axialer Richtung und in Umfangsrichtung umschiießt und ebenso teilweise in radialer Richtung. Der Primärteil ist in diesem Fall zweiteilig ausgeführt. Der erste Teil des Primärteils_wird vom Schwungrad gebildet. Der zweite Teil des Primärteils_wird von einer drehfest mit diesem gekoppelten Gehäusescheibe gebildet.

Gemäß einer besonders vorteilhaften Ausgestaltung kann die Verteilung der Trägheitsmomente zwischen Schwungrad bzw. Primärteil und Sekundärteil zusätzlich entsprechend den schwingungstechnischen Erfordernissen des Antriebsstranges angepaßt werden, indem beispielsweise das Trägheitsmoment des Primärteils durch konstruktiv beeinflußbare Massenverteilung reduziert wird, während das Trägheitsmoment des Sekundärteils durch entsprechende konstruktive Anordnung der Massen erhöht wird. Dadurch können Resonanzfrequenzen im Antriebsstrang hinsichtlich unkritischer Betriebsbereiche verschoben werden. Unkritisch bedeutet dabei unterhalb der Betriebsdrehzahl, bzw. mit einem Mindestabstand von n_{Betriebszahl} zu n_{kritisch} = 1.2.

Die erfindungsgemäße Lösung wird nachfolgend anhand von Figuren erläutert. Darin ist im einzelnen folgendes dargestellt:
- Figur 1: verdeutlicht in schematisch stark vereinfachter Darstellung eine Ausführung eines erfindungsgemäß gestalteten Antriebsstanges mit kombinierter Schwungrad-Dämpfungsvorrichtung anhand eines Ausschnittes aus einem Antriebsstrang;
- Figuren 2a bis 2c: verdeutlichen Ausführungsmöglichkeiten zur Anbindung einer kombinierten Schwungrad-Dämpfungsvorrichtung an die Anschlußelemente;
- Figuren 3a und 3b: verdeutlichen anhand eines Axialschnittes Ausführungen des Schwungrades und des Sekundärteiles;
- Figuren 4a und 4b: verdeutlichen beispielhaft anhand zweier Ansichten eine kombinierte Schwungrad-Dämpfungseinheit mit hydraulischer Dämpfung wobei die erfindungsgemäße Einstellbeweglichheit des Primärteils jedoch nicht erhunnbar ist
- Figur 5: zeigt ein Beispiel für Reibdämpfung wobei die erfindungsgemäße Einstellbeweglichheit des Primärteils jedoch nicht erhunnbar ist.

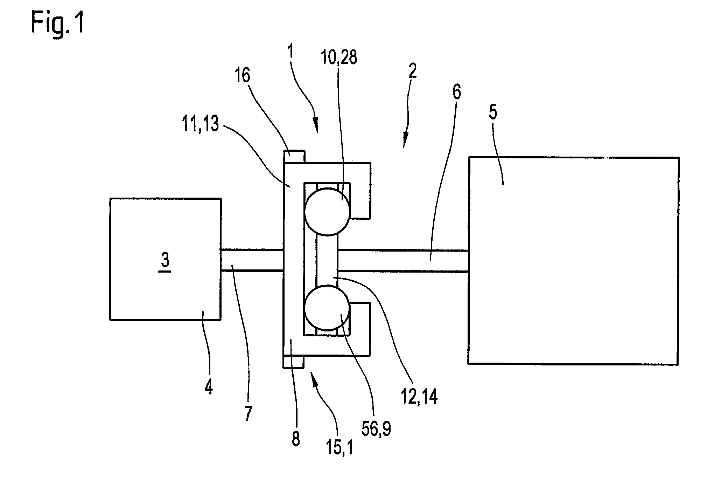

Figur 1 verdeutlicht in schematisch stark vereinfachter Darstellung eine Ausführung einer kombinierten Schwungrad-Dämpfungsvorrichtung 1, umfassend eine Vorrichtung zur Dämpfung von Schwingungen 56, insbesondere eines Schwingungsdämpfers, in einem Antriebsstrang 2 anhand eines Ausschnittes aus diesem.

Der Antriebsstrang 2 kann dabei zum Antrieb stationärer oder mobiler Einrichtungen, beispielsweise Fahrzeugen dienen. Dieser umfaßt eine Antriebsmaschine 3, beispielsweise in Form einer Verbrennungskraftmaschine 4. Dieser nachgeordnet ist eine Getriebebaueinheit 5, wobei die Eingangswelle 6 der Getriebebaueinheit 5 indirekt mit der Motorabtriebswelle 7 gekoppelt ist. Beim Einsatz in mobilen Einrichtungen, beispielsweise Kraftfahrzeugen, ist der Antriebsmaschine 3 in Form der Verbrennungskraftmaschine 4 ein Schwungrad 8 zugeordnet. Diesem kommt die Aufgabe zu, während des Arbeitstaktes einen Teil der Bewegungsenergie zu speichern und während des Leertaktes diese wieder abzugeben. Des weiteren sorgt das Schwungrad infolge seiner Trägheit für eine gleichförmige Drehbewegung der Kurbelwelle. Das Schwungrad 8 ist zu diesem Zweck drehfest mit der Motorabtriebswelle 7 gekoppelt. Die Vorrichtung zur Isolierung und Dämpfung von Schwingungen 56 umfaßt eine elastische Kupplung 9. Die elastische Kupplung 9 dient dabei der Leistungsübertragung zwischen der Motorabtriebswelle 7 und der Getriebeeingangswelle 6. Diese umfaßt mindestens ein erstes Kupplungselement 11, welches wenigstens mittelbar drehfest mit der Motorabtriebswelle 7 gekoppelt ist und ein zweites Kupplungselement 12, welches wenigstens mittelbar, das heißt direkt oder über weitere Übertragungseinrichtungen mit der Getriebeeingangswelle 6 drehfest verbindbar ist. In der kombinierten Schwungrad-Dämpfungseinheit 1 bildet dabei das erste Kupplungselement 11 einen Primärteil 13 und das zweite Kupplungselement 12 einen Sekundärteil 14 der Vorrichtung zur Dämpfung von Schwingungen 56. Beide sind über Mittel zur Federkopplung 28 und Mittel zur Dämpfungskopplung 10 miteinander verbunden. Erfindungsgemäß wird der Primärteil 13 dabei wenigstens teilweise vom Schwungrad 8 gebildet. Das heißt, beide bilden eine bauliche Einheit beziehungsweise sind als integrale Baueinheit 15 der kombinierten Schwungrad-Dämpfungseinheit 1 konzipiert. Diese Funktionszusammenfassung von Primärteil 13 und Schwungrad 8 dient neben der damit erzielten Bauteilreduzierung auch der Möglichkeit, die beiden Komponenten Schwungrad 8 und elastische Kupplung 9 aus einer Hand fertigen und anbieten zu lassen. Die Gesamteinrichtung 56 aus Vorrichtung zur Dämpfung von Schwingungen 56 mit der wenigstens teilweisen Ausbildung des ersten Kupplungselementes 11 als Schwungrad 8 kann des weiteren auf einfache Art und Weise in bestehende Antriebsstränge mit geringem Platzbedarf in axialer Richtung integriert werden. Die Kopplung mit der Motorabtriebswelle 7 und der Getriebeeingangswelle 6 erfolgt in üblicher Weise, beispielsweise durch Aufstecken und Sichern gegenüber Verschiebbarkeit in axialer Richtung.

Des weiteren ist mit dem ersten Kupplungselement 11, d.h. dem Primärteil 13, ein Anlasserzahnkranz 16 drehfest gekoppelt. Dieser kann als integrale Baueinheit einteilig mit dem Schwungrad 8 und damit dem Primärteil 13 ausgeführt oder aber an dieser lösbar befestigt sein. Die konkrete Auswahl der Anordnung und Befestigung des Anlasserzahnkranzes 16 am Schwungrad 8 steht dabei im Ermessen des zuständigen Fachmannes.

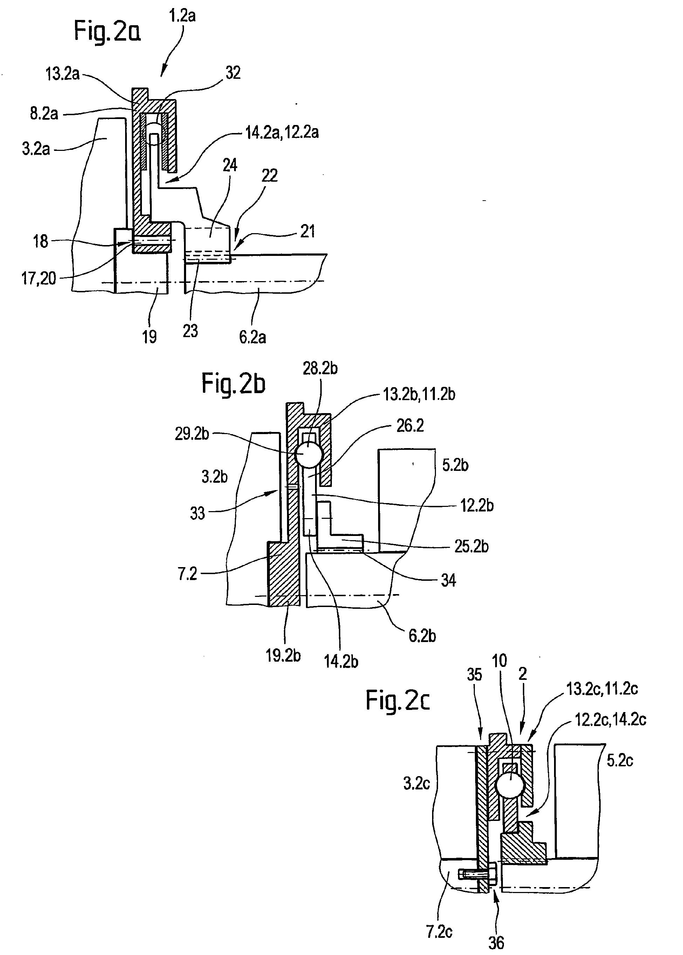

Die Figuren 2a bis 2c verdeutlichen in schematisch vereinfachter Darstellung Ausführungsmöglichkeiten zur Anbindung der kombinierten Schwungrad-Dämpfungseinheit 1 mit wenigstens teilweiser Ausgestaltung des Primärteiles 13 als Schwungrad 8 zur Ankopplung und Realisierung einer drehfesten Verbindung zwischen einer Abtriebswelle 7 der Antriebsmaschine 3 und einer Welle im Antriebsstrang, d.h. das Schwungrad bildet wenigstens einen Teil der Wandung der Dämpfungseinrichtung 56, insbesondere des Primärteiles 13.

Die Figur 2a verdeutlicht dabei eine Ausführung einer kombinierten Schwungrad-Dämpfungseinheit 1.2a mit einem Primärteil 13.2a, welches gleichzeitig als Schwungrad 8.2a fungiert, wobei das Primärteil 13.2a beziehungsweise das dieses verkörpernde Schwungrad 8.2a über Befestigungsmittel 17 im radial inneren Bereich 18 des Schwungrades 8.2a mit einem Flansch 19 an der Antriebsmaschine 3.2a angekoppelt sind. Die Befestigung erfolgt dabei über Befestigungsmittel 17, beispielsweise in Form von Schraubverbindungen 20, hier nur durch eine Strich-Punkt-Linie verdeutlicht. Das Sekundärteil 14.2a, welches auch als zweites Kupplungselement 12.2a fungiert, ist in der dargestellten Ausführung beispielsweise über eine Welle-Nabe-Verbindung 21 mit einem, mit dem Getriebeeingang wenigstens indirekt gekoppelten Wellenelement beispielsweise der Getriebeeingangswelle 6.2a drehfest verbunden. Zu diesem Zweck erfolgt die drehfeste Kopplung beispielsweise in Form einer Keilwellenverbindung. Das Sekundärteil 14.2a weist dazu in seinem radial inneren Bereich 22 eine komplementär zur Verzahnung an der mit dem Sekundärteil 14.2a zu koppelnden Welle 6.2a ausgeführte Verzahnung 23 auf. Die drehfesten Verbindungen durch Form- und Kraftschluß stellen dabei eine mögliche Verbindungsart dar. Die dargestellten Arten können auch für die Kopplung Schwungrad 8.2a und Abtriebswelle 7.2a und Sekundärteil 8.2 dem Grundprinzip nach vertauscht werden. Bei der in der Figur 2a dargestellten Ausführung bestünde theoretisch auch die Möglichkeit, die Kopplungsarten zwischen Primärteil 13.2a und Motorabtriebswelle 7.2a sowie Sekundärteil 14.2a und Getriebeeingangswelle 6.2a miteinander zu vertauschen oder beide Kopplungsmöglichkeiten analog zu gestalten.

Bei der in der Figur 2b dargestellten Ausführung sind zusätzliche Mittel zur axialen Fixierung des Sekundärteiles 14.2b als zweites Kopplungselement 12.2b vorgesehen. Dem ersten Teilelement 25 kommt dabei die Aufgabe der Realisierung der drehfesten Kopplung zwischen der Vorrichtung zur Dämpfung von Schwingungen 1 beziehungsweise der diese umfassenden elastischen Kupplung 9.3 mit einer mit der Getriebeeingangswelle gekoppelten Welle 6.2b oder direkt der Getriebeeingangswelle zu. Beide, erstes Teilelement 25 und zweites Teilelement 26 sind zu diesem Zweck drehfest miteinander verbunden, beispielsweise über Befestigungselemente 27. Das zweite Teilelement 26 dient dabei der Anlenkung der Mittel zur Federkopplung 28, beispielsweise in Form einer Federeinheit 29 und damit der drehfesten Verbindung zwischen erstem und zweitem Kupplungselement 11.2b und 12.2b. Die Mittel zur Federkopplung 28 umfassen dabei auch Mittel 30 zur Begrenzung der Verdrehbarkeit zwischen beiden Elementen - erstem Kupplungselement 11.2b und zweitem Kupplungselement 12.2b. Diese Mittel sind hier jedoch nicht dargestellt. Auch denkbar ist es, die Mittel zur Federkopplung 28 in nicht dargestellter Art und Weise derart auszugestalten, daß diese jeweils drehfest mit jedem der beiden Kupplungselemente 11.2b und 12.2.b verbunden sind und eine Verdrehung in Umfangsrichtung der beiden Kupplungselemente 11.2b und 12.2b zueinander über einen bestimmten Verdrehwinkel zulassen.

Bei der in der Figur 2a dargestellten Ausführung einer Vorrichtung zur Dämpfung von Schwingungen 1, insbesondere einer elastischen Kupplung 9.2a, deren erstes Kupplungselement 11.2a von einem Schwungrad 8.2a gebildet wird, handelt es sich um eine mögliche Ausgestaltung zur Verdeutlichung der Anbindung der einzelnen Kupplungselemente 11.2a und 12.2a, welche gleichzeitig das Primärteil 13.2a und das Sekundärteil 14.2a der Gesamtvorrichtung zur Dämpfung von Schwingungen 1.2a bilden. Diese ist frei von einer Lagerung zwischen Primärteil 13.2a und Sekundärteil 14.2a. In diesem Fall ist das zweite Kupplungselement 12.2a, welches gleichzeitig den Sekundärteil 14.2a bildet, fliegend auf der Getriebeeingangswelle oder einer mit dieser drehfest verbundenen Welle oder Wellenabsatz gelagert. Das Sekundärteil 14.2a ist dann beispielsweise im Rahmen der durch die Fertigung bedingten Toleranzen einstellbeweglich gegenüber dem Primärteil 13.2a bzw. dem Schwungrad 8.2a. Das Sekundärteil 14.2a ist im dargestellten Fall einteilig ausgeführt.

Um eine einfach Montage und Demontage der Gesamteinheit zu realisieren ist am Sekundärteil 14.2a eine Durchgangsöffnung 24 vorgesehen, durch welche die Befestigungsmittel 17 und 20 geführt werden können bzw. ein entsprechendes Werkzeug zur Betätigung dieser.

Die Figur 2b verdeutlicht eine weitere Ausgestaltung einer kombinierten Schwungrad-Dämpfervorrichtung 1.2b mit Schwungrad 8.2b und Schwingungsdämpfer 56.2b. Auch hier sind die Antriebsmaschine 3.2b, die Getriebebaueinheit 4.2 sowie die dazwischen angeordnete Vorrichtung zur Dämpfung von Schwingungen 56.2b mit integriertem Schwungrad 8.2b zu erkennen. Die Vorrichtung zur Dämpfung von Schwingungen 56.2b ist wie in den vorherigen Figuren ebenfalls nur schematisch angedeutet. Zu erkennen ist dabei, daß das Primärteil 13.2b das Sekundärteil 14.2b in radialer Richtung betrachtet in Umfangsrichtung und in axialer Richtung zumindest teilweise umschließt. Das Primärteil 13.2b ist dabei drehfest mit einem Flansch 19.2b verbunden und somit auf der Motorabtriebswelle 7.2b gelagert. Die Lagerung erfolgt dabei fliegend. Dies gilt in Analogie auch für die Ausführung des Sekundärteiles 14.2b, welche fliegend auf der Getriebeeingangswelle 6.2b beziehungsweise einer mit dieser drehfest gekoppelten Welle verbunden ist. Eine Lagerung zwischen den beiden Bestandteilen der Vorrichtung zur Dämpfung von Schwingungen - Primärteil 13.2b und Sekundärteil 14.2b ist nicht vorgesehen. Die beiden - Primärteil 13.2b und Sekundärteil 14.2b - bilden die beiden Kupplungselemente 11.2b und 12.2b einer elastischen Kupplung. Die Kopplung erfolgt über Mittel zur Federkopplung 28.2, welche hier ebenfalls als Federeinheit 29.2 ausgeführt sein können. Andere Möglichkeiten, beispielsweise in Form elastischer Membrane sind ebenfalls denkbar.

Bezüglich der Befestigung von Primärteil 13.2b beziehungsweise Sekundärteil 14.2b an der Motorabtriebswelle 7.2b beziehungsweise einem Flansch 19.2b und der Getriebeeingangswelle 6.2b bestehen eine Vielzahl von Möglichkeiten. Im dargestellten Fall handelt es sich bei der drehfesten Verbindung 33 zwischen Primärteil 13.2b und Motorabtriebswelle 7.2b beziehungsweise dem mit dieser drehfest gekoppelten Flansch 19.2b beispielsweise um eine formschlüssige Verbindung. Denkbar ist auch eine kraftschlüssige Verbindung. Dies gilt in Analogie auch für die drehfeste Verbindung 34 zwischen der Getriebeeingangswelle 6.2b und dem Sekundärteil 14.2b. Das Sekundärteil 14.2b und damit das zweite Kupplungselement 12.2b ist mindestens zweiteilig ausgeführt, wobei beim ersten Teilelement 25.2b die Funktion der drehfesten Kopplung mit den im Antriebsstrang nachfolgenden Elementen, beispielsweise Getriebeeingangswelle 6.2b zukommt, während das zweite Teilelement 26.2b die Funktion der Leistungsübertragung übernimmt.

Bei den in den Figuren 2a und 2b dargestellten Ausführungen des ersten Kupplungselementes 11.2 und des zweiten Kupplungselementes 12.2 beziehungsweise des Primärteiles 13.2 und des Sekundärteiles 14.2 handelt es sich jeweils um eine fliegende Lagerung von Primärteil 13.2 auf der Motorabtriebswelle 7.2 und des Sekundärteiles 14.2 auf der Getriebeeingangswelle 6.2, wobei erfindungsgemäß der Primärteil einstellbeweglich in radialer oder in radialer und axialer Richtung ausgeführt ist. Die Führung des Sekundärteiles 14.2a erfolgt dabei über das Federsystem, insbesondere die Federeinheit 29.2a und/oder bei Ausführung mit zusätzlichem Dämpfungssystems 32 auch optional oder zusätzlich über dieses.

Die Figur 2c verdeutlicht eine weitere Ausgestaltung der Integration einer Vorrichtung zur Dämpfung von Schwingungen 1.2c in einem Antriebsstrang 2.2c, wobei die Befestigung der Vorrichtung zur Dämpfung von Schwingungen 1.2c über eine sogenannte Flexplate 35 mit der Motorabtriebswelle 7.2c erfolgt. Die Flexplate 35 ist zu diesem Zweck ebenfalls drehfest mit der Motorabtriebswelle 7.2c verbunden. Diese drehfeste Kopplung kann dabei über Befestigungselemente 36 erfolgen.

Auch hier ist die Ausführung der kombinierten Schwungrad-Dämpfungseinrichtung 1.2c, insbesondere der Schwingungsdämpfer 56.2c frei von einer Lagerung zwischen Primärteil 13.2c und Sekundärteil 14.2c. Dadurch wird es möglich, die Sekundärseite radial einstellbeweglich zur Primärseite, das heißt dem Primärteil 13.2c zu gestalten. Die Bewegbarkeit erfolgt dabei innerhalb des Spieles zwischen den einzelnen miteinander zu koppelnden Elementen, erstes Kupplungselement 11.2c und zweites Kupplungselement 12.2c. Als Vorteile einer solchen Anordnung sind zu nennen: Reduzierung der infolge einer Wärmeausdehnung auftretenden axialen Kräfte, Reduzierung der Biegeschwingungen.

Bezüglich der konkreten Ausführung der Mittel zur Dämpfungskopplung 10 bestehen eine Vielzahl von Möglichkeiten. Dabei kann es sich im einfachsten Fall um eine Reibdämpfungseinrichtung handeln, wobei diese Funktion mit von den Mitteln zur elastischen Kopplung ausgeführt werden kann.

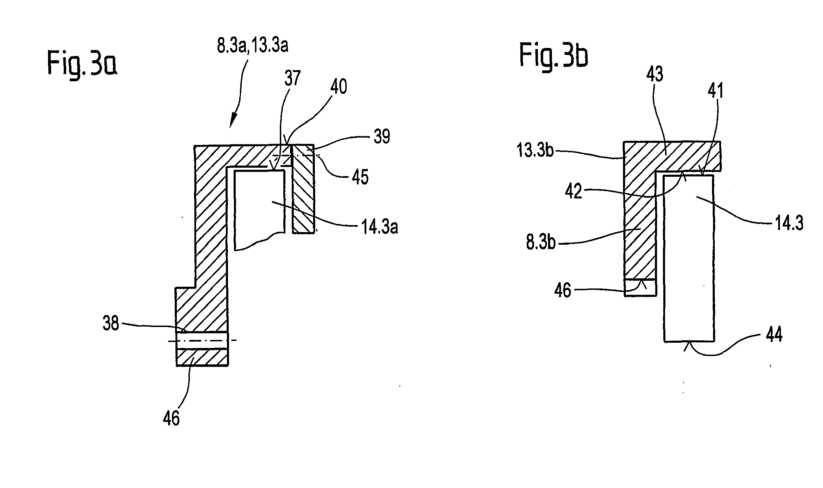

Die Figuren 3a und 3b verdeutlichen unterschiedliche Ausführungen des Schwungrades 8.3 in stark schematisiert vereinfachter Darstellung.

Bei der in der Figur 3a dargestellten Ausführung erstreckt sich das Schwungrad 8.3 in axialer Richtung bis in den Bereich der äußeren Fläche 37 des Sekundärteiles 14.3, vorzugsweise in axialer Richtung in Einbaulage betrachtet über die Erstreckung der radial äußeren Fläche 37 in axialer Richtung hinaus. Das Primärteil 13.3a, welches wenigstens teilweise vom Schwungrad 8.3a gebildet wird, weist ferner einen Flanschbereich 38 auf, welcher der Kopplung mit der Rotorantriebswelle 7 dient. Am Schwungrad 8.3a ist des weiteren ein scheibenförmiges Element 39, welches am Schwungrad 8.3a befestigt ist und sich vom äußeren Umfang 40 des Primärteiles 13.3a in radialer Richtung nach innen erstreckt und als Gehäusescheibe fungiert. Gehäusescheibe und Schwungrad 8.3a bilden die Wandungen der Dämpfungseinrichtung 56. Bei Ausführung als hydraulischer Dämpfer begrenzen diese auch die Dämpfungskammern. Die Verbindung zwischen Gehäusescheibe und Schwungrad 8.3 erfolgt vorzugsweise kraftschlüssig, beispielsweise über Befestigungselemente 45. Der Flanschbereich am Schwungrad 8.3 kann unterschiedlich ausgestaltet werden. Dieser dient neben der Lagefixierung im wesentlichen der Anordnung der Befestigungselemente. Werden diese in Form von Schraubverbindungen realisiert, ist im Flanschbereich 38 eine Durchgangsöffnung vorgesehen. Bei Ausführung einer formschlüssigen Verbindung kann der Flanschbereich 38 entsprechend mit radial oder axial ausgerichteten Mitnahmeelementen im radial inneren Bereich, bei radial ausgerichteten Mitnahmeelementen am Innenumfang 46 ausgestaltet werden.

Eine weitere Ausführung besteht darin, das Schwungrad 8.3 für kombinierte Schwungrad-Dämpfungseinheiten mit mechanischer Reibdämpfung im Querschnitt betrachtet L-förmig zu gestalten. Bei dieser Ausführung ist es möglich, das Schwungrad 8.3 einteilig auszuführen. Das Sekundärteil 14.3 ist derart ausgeführt, daß seine Außenabmessungen, insbesondere der äußere Umfang 41, geringere Abmessungen aufweisen als der Innenumfang 42 des U-förmigen Querschnittes im radial äußeren Bereich 43 des Primärteiles 13.3b. Das Sekundärteil 14.3 weist im dargestellten Fall dabei mit seinen Innenabmessungen, insbesondere dem Innenumfang 44 in radialer Richtung betrachtet geringere Abmessungen auf, als der Innenumfang 46 des Schwungrades 8.3b im Querschnitt betrachtet im radial inneren Bereich. Die Anbindung des Schwungrades 8.3b an die Motorabtriebswelle kann kraft- und/oder formschlüssig erfolgen. Im dargestellten Fall weist das Schwungrad 8.3b im Bereich des Innenumfanges 46 Mitnahmeelemente auf, beispielsweise in Form einer Verzahnung. Eine andere, hier nicht dargestellte Möglichkeit besteht in der kraftschlüssigen Kopplung mittels Verbindungselementen, beispielsweise Schrauben.

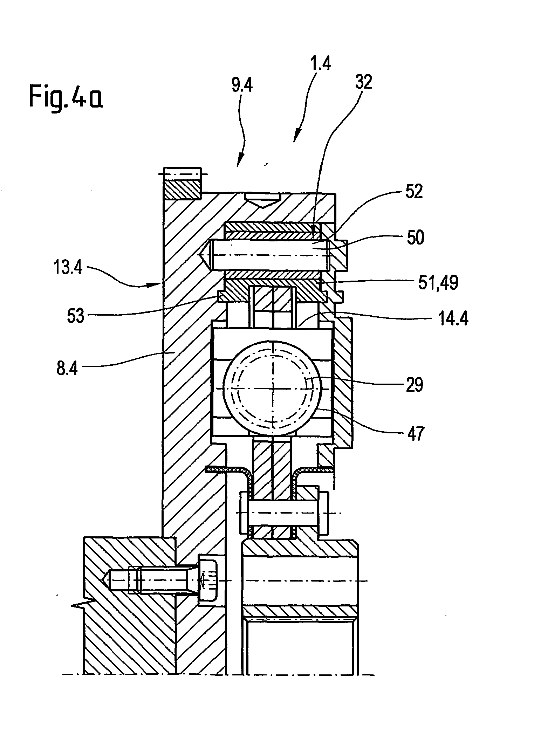

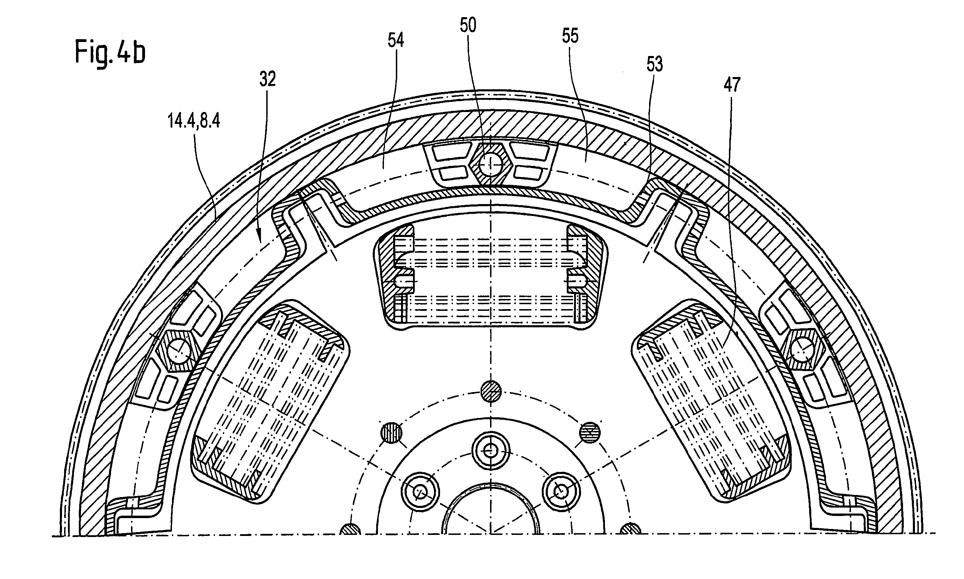

Die Figuren 4a und 4b verdeutlichen beispielhaft eine Ausführung einer erfindungsgemäß gestalteten kombinierten Schwungrad-Dämpfungseinheit 1.4 hinsichtlich der Kupplungs- und Dämpfungseigenschaften in zwei Ansichten. Die Figur 4a verdeutlicht einen Längsschnitt durch eine kombinierte Schwungrad-Dämpfungseinheit 1.4 mit hydraulischer Dämpfung, umfassend einen Primärteil 13.4 und einen Sekundärteil 14.4a. Die beiden Teile - Primärteil 13.4 und Sekundärteil 14.4 - sind in Umfangsrichtung relativ zueinander begrenzt verdrehbar, und zwar entgegen der Kraft von Energiespeichereinheiten, insbesondere Federeinheiten 29, von denen vorzugsweise mehrere über den Umfang des Schwingungsdämpfers verteilt angeordnet sind. Die Federeinheiten 29 befinden sich radial innerhalb einer Dämpfungskammer 47. Diese kann mit Fett oder einem anderen Dämpfungsfluid gefüllt werden. Die Funktion der elastischen Kupplung 9.4 wird dabei vom Schwungrad 8.4 und vom Sekundärteil 14.4 und den Federeinheiten 29 erfüllt. Die Funktion der Dämpfung wird durch die Dämpfungskammer 47 und das in diesen enthaltene Fluid erfüllt. Die Dämpfungskammern 47 können dabei gleichzeitig in den zwischen Primärteil und Sekundärteil gebildeten Kammern zur Aufnahme der Federeinheiten gebildet werden oder aber von separaten Kammern. Die Federeinheiten 29 sind zu diesem Zweck in Ausnehmungen, beispielsweise am Sekundärteil 14.4 angeordnet und erstrecken sich in Umfangsrichtung des Sekundärteils 14.4 und stützen sich am Schwungrad 8.4 ab. Die Funktion der Federeinheit 29 besteht dabei darin, während des gesamten Betriebes Drehmoment auf das Sekundärteil 14.4 zu übertragen, um dieses in Rotation zu versetzen und druch entsprechende Einstellung der Federsteifigkeit Resonanzen zu verschieben. Im Fall des Auftretens von Drehschwingungen am Schwungrad 8.3 werden diese in das Sekundärteil 14.4 eingeleitet. Unter Wirkung des Torsionsmomentes im Betrieb des rotierenden Bauelementes kommt es dann zum Zusammendrücken der Federeinheit 29 und damit zur Relativbewegung zwischen dem Primär- und dem Sekundärteil 13.4 beziehungsweise 14.4a, was zur Einstellung eines Verdrehwinkels α führt. Bei Resonanzdurchgängen und beispielsweise bei Laststößen treten dabei sehr hohe Relativbewegungen zwischen Primär- und Sekundärteil auf, die dem Verdrehwinkel α überlagert sind. Zur Dämpfung dieser Relativbewegungen zwischen dem Schwungrad 8.4 und dem Sekundärteil 14.4 sind Mittel zur Dämpfungskopplung 32 vorgesehen, welche beispielsweise eine Hydraulikflüssigkeit umfassen, die wenigstens in einem Teilbereich des Zwischenraumes zwischen dem Schwungrad 8.4 und dem Sekundärteil 14.4 gebildet wird, einfüllbar ist. Die Befüllung des Zwischenraumes kann dabei derart erfolgen, daß entweder lediglich der Bereich ausgefüllt wird, in welchem sich zusätzliche Kammern, beispielsweise die Dämpfungskammern 47, welche zwischen Primär- und Sekundärteil 13.4 und 14.4 gebildet werden, oder auch die Federeinrichtungen 29 befinden, oder aber der gesamte Zwischenraum zwischen dem Schwungrad 8.4. und dem Sekundärteil 14.4a ausgefüllt wird. Zusätzlich können dabei an der Vorrichtung zur Dämpfung von Schwingungen 1.4 Mittel 48 zur Begrenzung des Verdrehwinkels vorgesehen werden. Die Begrenzung erfolgt beispielsweise durch Anschläge 49 am Sekundärteil 14.4a. Diese Anschläge 39 werden beispielsweise über Langlöcher im Sekundärteil, welche auf einem bestimmten Durchmesser in Umfangsrichtung angeordnet und vorzugsweise in gleichmäßigen Abständen zueinander verteilt sind, realisiert. Dem Sekundärteil 14 sind dazu Vorsprünge 50 im Bereich eines bestimmten Durchmessers am Schwungrad 8.4 zugeordnet, welche in Einbaulage in die Aussparungen beziehungsweise Langlöcher 51 eingreifen. Die Vorsprünge 50 sind dabei derart auszuführen, daß die Langlöcher 51 ohne Probleme in Umfangsrichtung gegenüber den Vorsprüngen 50 verschiebbar sind. Es ist auch denkbar, die Funktion des vorsprungtragenden Elementes dem Sekundärteil 14.4 zuzuweisen und die Aussparungen am Schwungrad 8.4 vorzusehen. Eine Reibung zwischen den beiden, das heißt den Vorsprüngen am Sekundärteil 14.4 oder am Schwungrad 8.4 ist zu vermeiden. Die Vorsprünge selbst können dabei Bestandteil des Sekundärteiles 14.4 oder des Primärteiles 13.4 sein, das heißt eine bauliche Einheit mit diesen Elementen bilden oder aber als zusätzliche Elemente ausgeführt werden, die mit dem Primär- oder Sekundärteil gekoppelt sind. Diese können beispielsweise von Verbindungselementen 52 gebildet werden, welche die einzelnen Teile beim mehrteiligen Schwungrad 8.3 in axialer Richtung miteinander verbinden, und die gleichzeitig die Funktion dieser Vorsprünge 50 mit übernehmen. Das Verbindungselement beziehungsweise die Verbindungselemente 52 erstrecken sich dabei über die Langlöcher 51 des Sekundärteiles 14.4 hinaus. Die Langlöcher 51, welche sich in Umfangsrichtung am Sekundärteil 14.4 erstrecken, bilden dann den Anschlag 49 für das Verbindungselement 52.

Weitere Ausführungen der Vorrichtung zur Schwingungsdämpfung sind denkbar, beispielsweise wie in der Druckschrift DE 39 23 749 C1 beschrieben. Bei der in der Figur 4 dargestellten Ausführung im Axialschnitt wird in dem mit einem Dämpfungsmedium gefüllten Innenraum zwischen dem Schwungrad 8.4 und Sekundärteil 14.4 ein sogenannter schwimmender Dämpfungsring 53 angeordnet, welcher weder mit dem Schwungrad 8.4 und dem Sekundärteil 14.4 in formschlüssiger Verbindung steht. Der schwimmende Dämpfungsring 53 bildet dabei mit dem Schwungrad 8.4 zumindest eine erste Verdrängungskammer 54 und mit dem Sekundärteil eine zweite Verdrängungskammer 55. Auf diese Weise ist der schwimmende Dämpfungsring 53 dem freien Kräftespiel während der Relativbewegung von Schwungrad 8.4 und Sekundärteil 14.4 ausgesetzt, wobei er gegenüber jedem der beiden Bauelemente jeweils begrenzt verdrehbar ist. Unter Berücksichtigung der Eigenmasse des schwimmenden Dämpfungsringes 53 sowie der zur Verfügung stehenden Spaltquerschnitte ist es dann möglich, das bei kleinen Schwingungsamplituden nur noch die eine Verdrängungskammer, beispielsweise 54, zur Dämpfung wirksam wird, während bei großen Schwingungsamplituden, insbesondere auch bei niedriger Schwingungsfrequenz, die zweite Verdrängungskammer, in diesem Fall 55, wirksam ist, nämlich immer dann, wenn die begrenzte Verdrehbarkeit des schwimmenden Dämpfungsringes 53 gegenüber einem der beiden Bauelemente 13.4 oder 14.4 ausgenutzt und die Verdrehbarkeit gegenüber dem anderen Bauelement 14.4 beziehungsweise 13.4 noch zur Verfügung steht. Der Dämpfungsring selbst kann einteilig oder aber auch mehrteilig in Umfangsrichtung ausgeführt werden. Eine mehrteilige Ausführung in axialer Richtung ist ebenfalls denkbar.

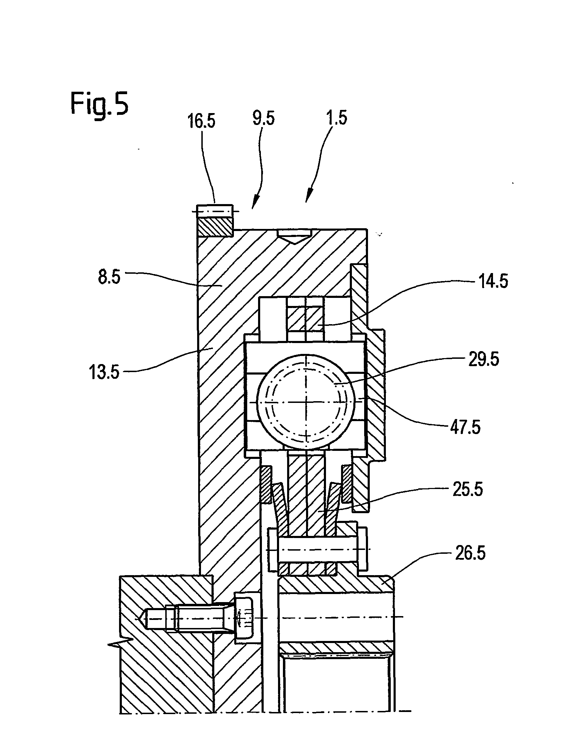

Figur 5 verdeutlicht eine Ausführung einer kombinierten Schwungrad-Dämpfereinheit 1.5 mit Reibdämpfung. Diese umfaßt ein Primärteil 13.5 und ein Sekundärteil 14.5, welche in Umfangsrichtung relativ zueinander begrenzt verdrehbar sind und zwar entgegen der Kraft von Energiespeichereinheiten, insbesondere Federeinheiten 29.5, von denen vorzugsweise mehrere über den Umfang des Schwingungsdämpfers verteilt angeordnet sind. Die Federeinheiten befinden sich dabei innerhalb einer Dämpfungskammer 47.5. Die Funktion der elastischen Kupplung 9.5 wird dabei vom Schwungrad 8.5, welches wenigstens teilweise das Primärteil 13.5 bildet und vom Sekundärteil 14.5 und den Federeinheiten 29.5 erfüllt. Zusätzlich wird hier die Dämpfungsfunktion über die Federeinheiten 29.5 realisiert. Auch hier trägt das Schwungrad 8.5 den Anlasserzahnkranz 16.5. Das Sekundärteil 14.5 ist zweiteilig ausgeführt. Das erste Teilelement 25.5 trägt dabei die Federn 29.5 wenigstens teilweise und das zweite Teilelement 26.5 dient der Ankopplung an Anschlußelemente, beispielsweise eine Getriebeeingangswelle.

Die Figuren 4 und 5 stellen beispielhaft mögliche konstruktive Ausgestaltungen der Dämpfungsvorrichtung der kombinierten Schwungrad-Dämpfungseinheit dar. Entsprechend des Einsatzfalles sind spezielle Abwandlungen möglich, die jedoch vom Grundprinzip, der baulichen Integration des Schwungrades in einer Dämpfungseinheit Gebrauch machen.

### Bezugszeichenliste

- 1: Vorrichtung zur Dämpfung von Schwingungen
- 2: Antriebsstrang
- 3: Antriebsmaschine
- 4: Verbrennungskraftmaschine
- 5: Getriebebaueinheit
- 6: Getriebeeingangswelle
- 7: Motorabtriebswelle
- 8: Schwungrad
- 9: elastische Kupplung
- 10: Mittel zur Schwingungsdämpfung
- 11: erstes Kupplungselement
- 12: zweites Kupplungselement
- 13: Primärteil
- 14: Sekundärteil
- 15: Integrale Baueinheit
- 16: Anlasserzahnkranz
- 17: Befestigungsmittel
- 18: radial innerer Bereich
- 19: Flansch
- 20: Schraubverbindung
- 21: Welle-/Nabeverbindung
- 22: radial innerer Bereich
- 23: Verzahnung
- 24: Durchgangsöffnung
- 25: erstes Teilelement
- 26: zweites Teilelement
- 27: Befestigungselemente
- 28: Mittel zur elastischen Kopplung, Mittel zur Federkopplung
- 29: Federeinheit
- 30: Mittel zur Begrenzung der Verdrehbarkeit
- 31: Langlöcher
- 32: Dämpfungssystem
- 33: Drehfeste Verbindung
- 34: Drehfeste Verbindung
- 35: Flexplate
- 36: Befestigungselemente
- 37: Äußere Stirnfläche
- 38: Flanschbereich
- 39: Scheibenförmiges Element
- 40: Äußerer Umfang
- 41: Äußerer Umfang
- 42: Innenumfang
- 43: Radial äußerer Bereich
- 44: Innenumfang
- 45: Befestigungselemente
- 46: Innenumfang
- 47: Dämpfungskammer
- 48: Mittel zur Begrenzung des Verdrehwinkels
- 49: Anschlag
- 50: Vorsprünge
- 51: Langloch
- 52: Verbindungselement
- 53: Schwimmender Dämfpungsring
- 54: Erste Verdrängungskammer
- 55: Zweite Verdrängungskammer
- 56: Vorrichtung zur Dämpfung von Schwingungen

## Patentansprüche

1. Antriebsstrang
mit einer Antriebsmaschine (3) und einer wenigstens indirekt drehfest mit der Antriebsmaschine (3) koppelbaren Getriebebaueinheit (5); wobei zwischen der Antriebsmaschine (3) und der Getriebebaueinheit (5) eine kombinierte Schwungrad-Dämpfungseinheit (1) angeordnet ist;
die Antriebsmaschine (3) weist eine Motorabtriebswelle (7) auf, und die Getriebebaueinheit (5) weist eine Eingangswelle (6) auf, welche indirekt mit der Motorabtriebswelle (7) gekoppelt ist;
die kombinierte Schwungrad-Dämpfungseinheit (1) weist eine Vorrichtung zur Dämpfung von Schwingungen, umfassend einen Primärteil (13) und einen Sekundärteil (14), die relativ zueinander in Umfangsrichtung begrenzt verdrehbar sind, auf, wobei der Primärteil (13) und der Sekundärteil (14) über Mittel zur Federkopplung (28) und Dämpfungskopplung (10) miteinander gekoppelt sind, und der Primärteil (13) wenigstens teilweise von einem Schwungrad (8) gebildet wird; **dadurch gekennzeichnet, dass**
die kombinierte Schwungrad-Dämpfungseinheit (1) frei ist von einer zwischen dem Primärteil (13) und dem Sekundärteil (14) in radialer Richtung angeordneten Lagerung;
der Primärteil (13) auf der Motorabtriebswelle (7) gelagert ist, und der Sekundärteil (14) auf der Getriebeeingangswelle (6) gelagert ist,
wobei der Primärteil (13) einsteilbeweglich in radialer Richtung oder einstellbeweglich in radialer und axialer Richtung ausgeführt ist.

2. Antriebsstrang nach Anspruch 1, **dadurch gekennzeichnet, daß** dem Schwungrad (8) ein Anlasserkranz (16) zugeordnet ist, welcher drehfest mit dem Primärteil (13) verbunden ist.

3. Antriebsstrang nach Anspruch 2, **dadurch gekennzeichnet, daß** der Anlasserkranz (16) und das Schwungrad (8) einteilig ausgeführt sind.

4. Antriebsstrang nach einem der Ansprüche 1 bis 3, **dadurch gekennzeichnet, daß** das Sekundärteil (14) fliegend auf den jeweiligen Anschlußelementen (7) gelagert ist.

5. Antriebsstrang nach einem der Ansprüche 1 bis 4, **dadurch gekennzeichnet, daß** das Sekundärteil (14) gegenüber dem Schwungrad (8) in radialer und/oder axialer Richtung einstellbeweglich geführt ist.

6. Antriebsstrang nach einem der Ansprüche 1 bis 5; **dadurch gekennzeichnet, daß** das Schwungrad (8) Mittel zur formschlüssigen und/oder kraftschlüssigen Verbindung mit einer Abtriebswelle (7) einer Antriebsmaschine (3, 4) umfaßt.

7. Antriebsstrang nach einem der Ansprüche 1 bis 6, **dadurch gekennzeichnet, daß** das Sekundärteil (14) Mittel zur formschlüssigen und/oder kraftschlüssigen Verbindung mit einer Getriebeeingangswelle (6) oder einem, mit dieser drehfest gekoppelten Element umfaßt.

8. Antriebsstrang nach einem der Ansprüche 6 oder 7, **dadurch gekennzeichnet, daß** die Mittel zur kraftschlüssigen Verbindung von Befestigungselementen gebildet werden, welche die miteinander zu koppelnden Elemente von Schwungrad (8) und Abtriebswelle (7) oder Sekundärteil (14) und Getriebeeingangswelle (6) miteinander in radialer Richtung verspannen.

9. Antriebsstrang nach Anspruch 8, **gekennzeichnet durch** die folgenden Merkmale:
das Schwungrad (8) ist mit einem mit der Abtriebswelle (17) drehfest verbundenen Flansch (19) verbindbar und umfaßt Durchgangsöffnungen, welche optional ein Gewinde tragen;
das Sekundärteil (14) weist in axialer Richtung geführte Durchgangsöffnungen (24) zur Führung der **durch** die Durchgangsöffnungen am Schwungrad (8) geführten Befestigungselemente auf;
die Durchgangsöffnungen (24) am Sekundärteil (14) sind koaxial zu den Durchgangsöffnungen am Schwungrad (B).

10. Antriebsstrang nach Anspruch 9, **gekennzeichnet durch** die folgenden Merkmale:
das Schwungrad (8) ist mit einem mit einer Antriebswelle (6) verbundenen Flexplate (35) verbindbar und umfaßt Durchgangsöffnungen. welche optional ein Gewinde tragen;
die Befestigungselemente erstrecken sich **durch** das Schwungrad (8).

11. Antriebsstrang nach einem der Ansprüche 6 bis 10, **dadurch gekennzeichnet, daß** die Mittel zur formschlüssigen Verbindung zueinander komplementär ausgeführte Vorsprünge und Ausnehmungen am Innenumfang von Schwungrad (8) und/oder Sekundärteil (14) und am Außenumfang von Antriebswelle und/oder Anschlußelement zum Getriebeeingang aufweisen.

12. Antriebsstrang nach Anspruch 11, **dadurch gekennzeichnet, daß** die Mittel zur formschlüssigen Verbindung von einer Keilverzahnung oder einer Evolventenverzahnung gebildet werden.

13. Antriebsstrang nach einem der Ansprüche 1 bis 12, **dadurch gekennzeichnet, daß** die Mittel zur Federkopplung (28) die Mittel zur Dämpfungskopplung bilden.

14. Antriebsstrang nach einem der Ansprüche 1 bis 13, **dadurch gekennzeichnet, daß** die Mittel zur Federkopplung zwischen dem Schwungrad (8) und dem Sekundärteil (14) elastische Elemente umfassen.

15. Antriebsstrang nach einem der Ansprüche 1 bis 14, **dadurch gekennzeichnet, daß** die Mittel zur Federkopplung zwischen Primärteil (13) und Sekundärteil (14) angeordnete Federeinrichtungen umfassen.

16. Antriebsstrang nach einem der Ansprüche 1 bis 15, **dadurch gekennzeichnet, daß** Mittel zur Beeinflussung des Dämpfungsverhaltens vorgesehen sind, wobei die Mittel zur Beeinflussung des Dämpfungsverhaltens in der kombinierten Schwungrad-Dämpfungseinheit (1) integriert sind.

17. Antriebsstrang nach Anspruch 16, **dadurch gekennzeichnet, daß** die Mittel zur Beeinflussung des Dämpfungsverhaltens wenigstens eine Drosselstelle umfassen.

18. Antriebsstrang nach einem der Ansprüche 1 bis 17, **gekennzeichnet durch** die folgenden Merkmale:
mit Mitteln (48)zur Begrenzung des Verdrehwinkels zwischen dem
Primärteil (13) und der Sekundärteil (14);
die Mittel (48) sind der Dämpfungskammer (47) zugeordnet;
die Mittel (48) unterteilen die Dämpfungskammer (47) in zwei in ihrer Größe veränderliche Teilkammern und bilden eine Drosselstelle zwischen beiden Teilkammern.

19. Antriebsstrang nach Anpruch 18, **gekennzeichnet durch** die folgenden Merkmale:
Mittel umfassen wenigstens einen an der Sekundärmasse (14) angeordneten Vorsprung;
der Vorsprung greift in Aussparungen am Primärteil (13) in Einbaulage in Umfangsrichtung derart ein, daß dieser relativ gegenüber dem Primärteil (13) verschiebbar ist;
die Aussparungen im Primärteil (13) in Umfangsrichtung bilden einen Anschlag (49) mit dem Vorsprung (50) der Sekundärmasse (14).

20. Antriebsstrang nach Anspruch 19, **dadurch gekennzeichnet, daß** der Vorsprung (50) über ein Verbindungselement in Form einer Schraube realisiert wird.

21. Antriebsstrang nach einem der Ansprüche 1 bis 20, **dadurch gekennzeichnet, daß** das Verhältnis der Trägheitsmomente von Primär- und Sekundärteil (13,14) derart gewählt wird, daß kritische Eigenfrequenzen verschoben werden.

## Claims

1. A drive train, comprising an engine (3) and a transmission module (5) which can be coupled at least indirectly in a torsionally rigid manner with the engine (3), with a combined flywheel-damping unit (5) being arranged between the engine (3) and the transmission module (5), the engine (3) having an engine output shaft (7) and the transmission module (5) having an input shaft (6) which is coupled indirectly with the engine output shaft (7), the combined flywheel-damping unit (1) having an apparatus for damping oscillations, comprising a primary part (13) and a secondary part (14) which can be twisted relative to one another in the circumferential direction within limits, with the primary part (13) and the secondary part (14) being coupled with each other via means for spring coupling (28) and damping coupling (10), and the primary part (13) being formed at least partly by a flywheel (8), **characterized in that** the combined flywheel-damping unit (1) is free from a bearing arranged between the primary part (13) and the secondary part (14) in the radial direction, the primary part (13) being held on the engine output shaft (7) and the secondary part (14) being held on the transmission input shaft (6), with the primary part (13) being arranged to be adjustably movable in the radial direction or adjustably movable in the radial and axial direction.

2. A drive train according to claim 1, **characterized in that** the flywheel (8) is associated with a starter ring gear (16) which is connected with the primary part (13) in a torsionally rigid manner.

3. A drive train according to claim 2, **characterized in that** the starter ring gear (16) and the flywheel (8) are arranged in an integral way.

4. A drive train according to one of the claims 1 to 3, **characterized in that** the secondary part (14) is held in a flying manner on the respective connecting elements (7).

5. A drive train according to one of the claims 1 to 4, **characterized in that** the secondary part (14) is guided in an adjustably movable way in the radial and/or axial direction relative to the flywheel (8).

6. A drive train according to one of the claims 1 to 5, **characterized in that** the flywheel (8) comprises means for positive and/or non-positive connection with an output shaft (7) of an engine (3, 4).

7. A drive train according to one of the claims 1 to 6, **characterized in that** the secondary part (14) comprises means for positive and/or non-positive connection with a transmission input shaft (6) or an element which is coupled with the same in a torsionally rigid manner.

8. A drive train according to one of the claims 6 or 7, **characterized in that** the means for non-positive connection are formed by fastening elements which clamp the elements of flywheel (8) and output shaft (7) or secondary part (14) and transmission input shaft (6) to be coupled with each other in the radial direction.

9. A drive train according to claim 8, **characterized by** the following features:
the flywheel (8) can be connected with a flange (19) which is connected in a torsionally rigid manner with the output shaft (17) and comprises pass-through openings which optionally bear a thread;
the secondary part (14) has pass-through openings (24) guided in the axial direction for guiding the fastening elements guided through the pass-through openings on the flywheel (8);
the pass-through openings (24) on the secondary part (14) are arranged coaxially to the pass-through openings on the flywheel (8).

10. A drive train according to claim 9, **characterized by** the following features:
the flywheel (8) can be connected to a flexible plate (35) and comprises pass-through openings which optionally bear a thread;
the fastening elements extend through the flywheel (8).

11. A drive train according to one of the claims 6 to 10, **characterized in that** the means for positive connection comprise projections and recesses which are complementary with respect to each other on the inside circumference of the flywheel (8) and/or secondary part (14) and on the outside circumference of drive shaft and/or connecting element to the transmission input.

12. A drive train according to claim 11, **characterized in that** the means for positive connection are formed by a spline or an involute toothing.

13. A drive train according to one of the claims 1 to 12, **characterized in that** the means for spring coupling (28) form the means for damping coupling.

14. A drive train according to one of the claims 1 to 13, **characterized in that** the means for spring coupling comprise elastic elements between the flywheel (8) and the secondary part (14).

15. A drive train according to one of the claims 1 to 14, **characterized in that** the means for spring coupling comprise spring elements between the primary part (13) and the secondary part (14).

16. A drive train according to one of the claims 1 to 15, **characterized in that** means for influencing the damping behavior are provided, with the means for influencing the damping behavior being integrated in the combined flywheel-damping unit (1).

17. A drive train according to claim 16, **characterized in that** the means for influencing the damping behavior comprise at least one throttle point.

18. A drive train according to one of the claims 1 to 17, **characterized by** the following features:
means (48) for limiting the angle of torsion between the primary part (13) and the secondary part (14);
the means (48) are associated with the damping chamber (47);
the means (48) subdivide the damping chamber (47) into two partial chambers which are changeable relating to their size and form a throttle point between the two partial chambers.

19. A drive train according to claim 18, **characterized by** the following features:
the means comprise at least one projection arranged on the secondary mass (14);
the projection engages in recesses on the primary part (13) in the installed position in the circumferential direction in such a way that the same is displaceable relative to the primary part (13);
the recess in the primary part (13) in the circumferential direction form a stop (49) with the projection (50) of the secondary mass (14).

20. A drive train according to claim 19, **characterized in that** the projection (50) is realized by means of a connecting element in the form of a screw.

21. A drive train according to one of the claims 1 to 20, **characterized in that** the ratio of moments of inertia of primary and secondary part (13, 14) is chosen in such a way that critical natural frequencies are displaced.

## Revendications

1. Chaîne d'entraînement
avec une machine motrice (3) et une unité d'embrayage (5) pouvant être couplée au moins indirectement de manière solidaire en rotation avec la machine motrice (3), dans laquelle
il est prévu entre la machine motrice (3) et l'unité d'embrayage (5) une unité d'amortissement combinée à volant d'inertie (1) ;
la machine motrice (3) présente un arbre de sortie du moteur (7) et l'unité d'embrayage (5) présente un arbre d'entrée (6) qui est couplé indirectement avec l'arbre de sortie du moteur (7) ;
l'unité d'amortissement combinée à volant d'inertie (1) présente un
dispositif pour amortir les vibrations, comprenant une partie primaire (13) et
une partie secondaire (14), capables de rotation limitée l'une par rapport à l'autre dans le sens de la circonférence, la partie primaire (13) et la partie secondaire (14) étant couplées entre elles par des moyens de couplage élastique (28) et de couplage d'amortissement (10), et la partie primaire (13) étant formée au moins en partie par un volant d'inertie (8) ;
**caractérisée en ce que** :
l'unité d'amortissement combinée à volant d'inertie (1) ne comporte pas de support disposé entre la partie primaire (13) et la partie secondaire (14) dans le sens radial ;
la partie primaire (13) est supportée sur l'arbre de sortie du moteur (7) et la partie secondaire (14) est supportée sur l'arbre d'entrée de l'embrayage (6), la partie primaire (13) étant conçue de manière mobile pour s'ajuster dans le sens radial ou mobile pour s'ajuster dans le sens radial et axial.

2. Chaîne d'entraînement selon la revendication 1, **caractérisée en ce que** le volant d'inertie (8) est associé à une couronne de démarrage (16), qui est reliée de manière solidaire en rotation à la partie primaire (13).

3. Chaîne d'entraînement selon la revendication 2, **caractérisée en ce que** la couronne de démarrage (16) et le volant d'inertie (8) sont réalisés d'une seule pièce.

4. Chaîne d'entraînement selon la revendication 1 à 3, **caractérisée en ce que** la partie secondaire (14) est supportée en porte-à-faux sur les éléments de raccordement (7) correspondants.

5. Chaîne d'entraînement selon l'une des revendications 1 à 4, **caractérisée en ce que** la partie secondaire (14) est guidée de manière mobile pour s'ajuster par rapport au volant d'inertie (8) dans le sens radial et/ou axial.

6. Chaîne d'entraînement selon l'une des revendications 1 à 5, **caractérisée en ce que** le volant d'inertie (8) comprend des moyens pour l'assemblage en correspondance de forme et/ou par friction avec un arbre de sortie (7) d'une machine motrice (3, 4).

7. Chaîne d'entraînement selon l'une des revendications 1 à 6, **caractérisée en ce que** la partie secondaire (14) comprend des moyens pour l'assemblage en correspondance de forme et/ou par friction avec un arbre d'entrée d'embrayage (6) ou avec un élément couplé à celui-ci de manière solidaire en rotation.

8. Chaîne d'entraînement selon l'une des revendications 6 ou 7, **caractérisée en ce que** les moyens pour l'assemblage par friction sont formés par des éléments de fixation qui serrent les éléments à coupler ensemble du volant d'inertie (8) et de l'arbre de sortie (7) ou de la partie secondaire (14) et de l'arbre d'entrée d'embrayage (6) ensemble dans le sens radial.

9. Chaîne d'entraînement selon la revendication 8, **caractérisée en ce que** :
le volant d'inertie (8) peut être relié à une bride (19) reliée de manière solidaire en rotation à l'arbre de sortie (17) et comprend des ouvertures de passage qui portent facultativement un filetage ;
la partie secondaire (14) présente des ouvertures de passage (24) dirigées dans le sens axial pour le guidage des éléments de fixation passés à travers les ouvertures de passage du volant d'inertie (8) ;
les ouvertures de passage (24) de la partie secondaire (14) sont coaxiales des ouvertures de passage du volant d'inertie (8).

10. Chaîne d'entraînement selon la revendication 9, **caractérisée en ce que**:
le volant d'inertie (8) peut être relié à une plaque flexible (35) reliée à un arbre d'entraînement (8) et comprend des ouvertures de passage, qui portent facultativement un filetage ;
les éléments de fixation s'étendent à travers le volant d'inertie (8).

11. Chaîne d'entraînement selon l'une des revendications 6 à 10, **caractérisée en ce que** les moyens pour l'assemblage en correspondance de forme comportent des saillies et des creux complémentaires les uns des autres sur la circonférence intérieure du volant d'inertie (8) et/ou de la partie secondaire (14) et sur la circonférence extérieure de l'arbre d'entraînement et/ou de l'élément de raccordement à l'entrée de l'embrayage.

12. Chaîne d'entraînement selon la revendication 11, **caractérisée en ce que** les moyens pour l'assemblage en correspondance de forme sont formés par une denture conique ou une denture à développante.

13. Chaîne d'entraînement selon l'une des revendications 1 à 12, **caractérisée en ce que** les moyens de couplage élastique (28) forment les moyens de couplage d'amortissement.

14. Chaîne d'entraînement selon l'une des revendications 1 à 13, **caractérisée en ce que** les moyens de couplage élastique comprennent des éléments élastiques entre le volant d'inertie (8) et la partie secondaire (14).

15. Chaîne d'entraînement selon l'une des revendications 1 à 14, **caractérisée en ce que** les moyens de couplage élastique comprennent des dispositifs à ressort disposés entre la partie primaire (13) et la partie secondaire (14).

16. Chaîne d'entraînement selon l'une des revendications 1 à 15, **caractérisée en ce que** des moyens pour influer sur le comportement d'amortissement sont prévus, lesquels moyens pour influer sur le comportement d'amortissement sont intégrés dans l'unité d'amortissement combinée à volant d'inertie (1).

17. Chaîne d'entraînement selon la revendication 16, **caractérisée en ce que** les moyens pour influer sur le comportement d'amortissement comprennent au moins un point d'étranglement.

18. Chaîne d'entraînement selon l'une des revendications 1 à 17, **caractérisée en ce que** : des moyens (48) sont prévus pour limiter l'angle de rotation entre la partie primaire (13) et la partie secondaire (14) ;
les moyens (48) sont associés à la chambre d'amortissement (47) ;
les moyens (48) partagent la chambre d'amortissement (47) en deux chambres partielles de taille variable et forment un point d'étranglement entre les deux chambres partielles.

19. Chaîne d'entraînement selon la revendication 18, **caractérisée en ce que** :
les moyens comprennent au moins une saillie disposée sur la masse secondaire (14) ;
la saillie se met en prise dans des creux de la partie primaire (13) dans la position de montage dans le sens de la circonférence, de telle sorte qu'elle peut coulisser relativement par rapport à la partie primaire (13) ;
les creux de la partie primaire (13) dans le sens de la circonférence forment une butée (49) avec la saillie (50) de la masse secondaire (14).

20. Chaîne d'entraînement selon la revendication 19, **caractérisée en ce que** la saillie (50) est réalisée par un élément de liaison prenant la forme d'une vis.

21. Chaîne d'entraînement selon l'une des revendications 1 à 20, **caractérisée en ce que** le rapport des moments d'inertie des parties primaire et secondaire (13, 14) est choisi de telle sorte que les fréquences propres critiques soient décalées.
